(19) Europäisches Patentamt
European Patent Office
Office européen des brevets

(11) EP 3 078 804 A1

(12) EUROPÄISCHE PATENTANMELDUNG

(43) Veröffentlichungstag:
12.10.2016 Patentblatt 2016/41

(51) Int Cl.:
F01D 5/14 (2006.01)          F01D 5/22 (2006.01)
F01D 11/00 (2006.01)         F01D 11/08 (2006.01)

(21) Anmeldenummer: 16162874.8

(22) Anmeldetag: 30.03.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 09.04.2015 DE 102015206384

(71) Anmelder: Rolls-Royce Deutschland Ltd & Co KG
15827 Blankenfelde-Mahlow (DE)

(72) Erfinder: GÜMMER Dr., Volker
15831 Mahlow (DE)

(74) Vertreter: Maikowski & Ninnemann
Patentanwälte Partnerschaft mbB
Postfach 15 09 20
10671 Berlin (DE)

(54) DECKBANDANORDNUNG EINER SCHAUFELREIHE VON STATOR- ODER ROTORSCHAUFELN UND ZUGEHÖRIGE TURBINE

(57)     Die Erfindung betrifft eine Deckbandanordnung (10) einer Schaufelreihe (30) von Stator- oder Rotorschaufeln, die aufweist: eine in einem Hauptströmungspfad einer Strömungsmaschine angeordnete Schaufelreihe (30) mit einer Mehrzahl von Schaufel, die jeweils eine Vorderkante (VK) und eine Hinterkante (HK) aufweisen; und ein Deckband (10) der Schaufelreihe (30), das betrachtet in einem Längsschnitt der Strömungsmaschine wenigstens teilweise in ein Bauteil oder eine Bauteilgruppe (20) eingebettet ist, wobei eine Kavität ausgebildet ist, die das Deckband (10) umgibt und mit zwei Kavitätsöffnungen (21, 22) mit dem Hauptströmungspfad in Verbindung steht, wobei die vordere Kavitätsöffnung (21) stromauf der Vorderkante (VK) und die hintere Kavitätsöffnung (22) stromab der Hinterkante (HK) der Schaufeln der Schaufelreihe (30) vorgesehen ist. Dabei weist das Deckband (10) eine Anströmkante (11) und eine Abströmkante (12) auf. Es ist vorgesehen, dass in mindestens einem Längsschnitt der Strömungsmaschine die Deckbandkontur im Bereich der Anströmkante (11) und/oder im Bereich der Abströmkante (12) vom Hauptströmungspfad weg in die Kavität zurückgenommen ist. Eine zugehörige Turbine wird ebenfalls präsentiert.

FIG 2A

EP 3 078 804 A1

**Beschreibung**

Die Erfindung betrifft eine Deckbandanordnung einer Schaufelreihe von Stator- oder Rotorschaufeln gemäß dem Oberbegriff des Anspruchs 1.

Die aerodynamische Belastbarkeit und die Effizienz von Turbinen werden durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Eine Quelle der in Turbinen entstehenden Verluste besteht in der Leckageströmung um die Schaufeldeckbänder, wie sie häufig am inneren Schaufelende von Statoren oder auch am äußeren Schaufelende von Rotoren zu finden sind. Die Leckageströmung wird üblicherweise durch Dichtspitzen oder andere Dichtmittel, die innerhalb der Kavität, in die das Deckband eingebettet ist, angeordnet sind, klein gehalten. Die Leckageströmung kann dennoch, insbesondere in hoch belasteten Schaufelreihen, die durch einen hohen statischen Druckabfall und somit einen hohen Antrieb für die Leckageströmung gekennzeichnet sind, sehr schädliche Auswirkungen auf das Leistungsverhalten der Turbine haben.

Bei Deckbandanordnungen nach dem Stand der Technik ist der Leckagestrom im Wesentlichen durch den Spalt gegeben, den die Dichtmittel zwischen stehenden und drehenden Bauteilen lassen. Üblicherweise wird der Dichtspalt zwischen Dichtspitzen und einer den Dichtspitzen gegenüberliegenden Kontur gebildet. Dabei steigt der Leckagestrom mit der aerodynamischen Belastung und der Dichtspaltweite, die für die mit Deckband versehene Schaufelreihe gewählt wird, stark an. Die Folge sind schlechte Betriebskennwerte im Hinblick auf den Wirkungsgrad und die Weite des Betriebsbereichs der Turbine.

Der vorliegenden Erfindung liegt die Aufgabe zu Grunde, eine Deckbandanordnung einer Schaufelreihe von Stator- oder Rotorschaufeln zur Verfügung zu stellen, die Leckageströmungen um das Deckband wirksam reduziert.

Diese Aufgabe wird erfindungsgemäß durch eine Deckbandanordnung mit den Merkmalen des Anspruchs 1 gelöst. Ausgestaltungen der Erfindung sind in den Unteransprüchen angegeben.

Danach sieht die vorliegende Erfindung vor, dass in mindestens einem Längsschnitt die Deckbandkontur im Bereich ihrer Anströmkante und/oder im Bereich ihrer Abströmkante vom Hauptströmungspfad weg in die Kavität zurückgenommen ist. Hierdurch wird eine Krümmung der wandnahen Stromlinien und eine lokale Änderung des Druckfeldes nahe der Kavitätsöffnungen an der Hauptströmungspfadberandung erreicht. Insbesondere wird durch eine örtliche Rücknahme des Deckbandes im Bereich der Anströmkante und/oder der Abströmkante (bzw. im Bereich der Vorderkante und/oder der Hinterkante der mit dem Deckband versehenen Schaufelreihe) der Verlauf der Strömung am Rand des Hauptströmungspfades zusätzlich beeinflusst und auf diese Weise das für die Deckband-Leckageströmung bestimmende, an der Kavität wirkende Druckgefälle verringert.

Die erfindungsgemäßen Lösung beruht auf dem Gedanken, den statischen Druck an der Anströmkante und/oder an der Abströmkante des Deckbandes durch eine besondere Gestalt des Deckbandes im Bereich der Anströmkante und/oder im Bereich der Abströmkante so zu beeinflussen, dass das statische Druckgefälle zwischen den Öffnungen der Kavität am Hauptströmungspfad reduziert und damit der unerwünschte Leckagestrom verringert oder idealerweise unterbunden wird.

Im Einzelnen umfasst die vorliegende Erfindung die Gestaltung eines Deckbandes einer Schaufelreihe, insbesondere einer Turbine derart, dass an wenigstens einem Ort des Umfangs und wenigstens in einer der Bereiche der Vorder- oder Hinterkante der Schaufelreihe mit Deckband die Kontur des Deckbandes vom Hauptströmungspfad zurückgezogen angeordnet ist, derart, dass hierdurch ein insgesamt glatter Verlauf der Hauptströmungspfadberandung nicht mehr gegeben ist und auf diese Weise - in Strömungsrichtung betrachtet - mit einem unmittelbar stromauf des Deckbandes vorgesehenen Abschnitts der Hauptströmungspfadberandung ein Rücksprung und mit einer unmittelbar stromab des Deckbandes vorgesehenen Abschnitts der Hauptströmungspfadberandung ein Vorsprung gebildet ist.

Günstig ist es dabei, wenn die Deckbandkontur in wenigstens einem der Bereiche der Vorder- oder Hinterkante gegenüber einer Verbindungslinie vom Hauptströmungspfad zurückgezogen angeordnet ist, wobei die Verbindungslinie durch eine Polynom-Interpolation dritten Grades oder eine Spline-Interpolation dritten Grades durch vier Referenzpunkte gebildet ist, wobei die Referenzpunkte durch Schaufelkantenfusspunkte der direkt benachbarten Schaufelreihen oder festgelegte Äquivalenzpunkte an der Hauptströmungspfadberandung gegeben sind. Dabei kann vorgesehen sein, dass im Bereich wenigstens einer der Öffnungen, mit denen die Deckbandkavität mit dem Hauptströmungspfad in Verbindung steht, ein effektiv geschwungener Verlauf der Hauptströmungspfadkontur und der Stromlinien am Rand des Hauptströmungspfades gegeben ist, entsprechend einem in Hauptströmungsrichtung gegebenen Konturrücksprung im Bereich der Öffnung stromauf der Vorderkante der Schaufelreihe und/oder entsprechend einem in Hauptströmungsrichtung gegebenen Konturvorsprung im Bereich der Öffnung stromab der Hinterkante der Schaufelreihe.

Eine Polynom-Interpolation ist eine Interpolation auf der Grundlage von Polynomen. Ein Interpolationspolynom stellt eine Funktion dar, die die betrachteten Referenzpunkte interpoliert. Vorliegend werden für die Interpolation Polynome dritten Grades betrachtet, die wie folgt aufgebaut sind:

$$P(x) = a_0 + a_1x + a_2x^2 + a_3x^3$$

wobei $a_i$ reelle Zahlen sind.

Bei der Spline-Interpolation werden die Referenzpunkte mit Hilfe stückweise stetiger Polynome (Splines) interpoliert. Wiederum werden Splines dritten Grades betrachtet, d.h. die stückweise stetigen Polynome, die die Spline-Interpolation bilden, sind Polynome dritten Grades.

In beiden Fällen (Polynom-Interpolation und Spline-Interpolation) wird eine glatte und harmonische Biegelinie durch die Referenzpunkte bereitgestellt, wobei die Biegelinie durch alle Referenzpunkte mit minimaler Biegeenergie und kleinsten Krümmungen verläuft.

In einer Ausgestaltung der Erfindung ist danach vorgesehen, dass das Deckband, in Achsrichtung der Strömungsmaschine betrachtet, zwischen mindestens jeweils zwei am Rand des Hauptströmungspfades der Strömungsmaschine befindlichen (gedachten) Referenzpunkten angeordnet ist. Die ersten zwei Referenzpunkte sind durch die Fusspunkte von Vorderkante und Hinterkante der stromauf des Deckbandes angeordneten Schaufelreihe oder - bei Fehlen dieser Schaufelreihe - durch zwei Randpunkte des Hauptströmungspfades gebildet, die sich z.B. 100% und 150% der axialen Erstreckung der mit Deckband versehenen Schaufelreihe stromauf der Vorderkante der mit Deckband versehenen Schaufelreihe befinden. Die zweiten zwei Referenzpunkte sind durch die Fusspunkte von Vorderkante und Hinterkante der stromab des Deckbandes angeordneten Schaufelreihe oder - bei Fehlen dieser Schaufelreihe - durch zwei Randpunkte des Hauptströmungspfades gebildet, die sich z.B. 100% und 150% der axialen Erstreckung der mit Deckband versehenen Schaufelreihe stromab der Hinterkante der mit Deckband versehenen Schaufelreihe befinden. Dabei ist das Deckband an wenigstens einem Ort des Umfangs und in wenigstens einem der Bereiche der Vorder- oder Hinterkante der zugehörigen Schaufelreihe unter eine Verbindungslinie in die Kavität zurückgenommen, die durch eine Polynom-Interpolation dritten Grades oder eine Spline-Interpolation dritten Grades durch diese vier Referenzpunkte gebildet ist. Dabei wird aufgrund dieser Deckbandrücknahme im Bereich wenigstens einer der zwei Kavitätsöffnungen ein geschwungener Verlauf der effektiven Hauptströmungspfadbegrenzung sowie der Stromlinien am Rand des Hauptströmungspfades erreicht.

Die Anströmkante des Deckbandes kann zur besseren Strömungsführung mit einer Fase oder einer Abrundung versehen sein. Des Weiteren kann sie zur besseren Strömungsführung im Wesentlichen nasenförmig ausgebildet sein. Ebenso kann die Abströmkante des Deckbandes zur besseren Strömungsführung mit einer Fase oder Abrundung versehen sein. Des Weiteren kann die Abströmkante des Deckbandes zur besseren Strömungsführung im Wesentlichen nasenförmig ausgebildet sein.

Gemäß einer Ausgestaltung der Erfindung ist an der Kavitätsöffnung stromauf der Schaufelreihe mit Deckband die Kante des die Kavitätsöffnung stromaufwärtig begrenzenden Bauteils an der Hauptströmungspfadberandung angefast oder abgerundet oder im Wesentlichen nasenförmig ausgebildet. Ebenso kann an der Kavitätsöffnung stromab der Schaufelreihe mit Deckband die Kante des die Kavitätsöffnung stromabwärtig begrenzenden Bauteils an der Hauptströmungspfadberandung angefast oder abgerundet oder im Wesentlichen nasenförmig ausgebildet sein.

Eine Ausgestaltung der Erfindung sieht vor, dass die hauptströmungspfadzugewandte Kontur des Deckbandes im Bereich seiner Anströmkante so ausgebildet ist, dass angrenzend an den Hauptströmungspfad stromauf der Schaufelvorderkante zwischen der Deckbandkontur und der Außenkontur der Kavität eine Passage gebildet ist, wobei die Passage die eintretende Leckageströmung mit einer Richtungskomponente entgegen der Hauptströmung leitet und entsprechend die Längsachse der Passage zwischen sich und der Verbindungslinie einen spitzen Winkel ausbildet (in mathematisch negativer Drehrichtung, im Uhrzeigersinn).

Eine weitere Ausgestaltung der Erfindung sieht vor, dass die hauptströmungspfadzugewandte Kontur des Deckbandes im Bereich seiner Abströmkante so ausgebildet ist, dass angrenzend an den Hauptströmungspfad stromab der Schaufelhinterkante zwischen der Deckbandkontur und der Außenkontur der Kavität eine Passage gebildet ist, wobei die Passage die austretende Leckageströmung mit einer Richtungskomponente entgegen der Hauptströmung leitet und entsprechend die Längsachse der Passage zwischen sich und der Verbindungslinie einen spitzen Winkel ausbildet (in mathematisch positiver Drehrichtung, gegen den Uhrzeigersinn).

Die erfindungsgemäße Deckbandrücknahme kann auch sowohl im Bereich der Anströmkante als auch im Bereich der Abströmkante vorgesehen sein. Die Deckbandrücknahme erstreckt sich dabei in einer Ausgestaltung durchgehend zwischen Anströmkante und Abströmkante.

Gemäß einem weiteren Ausführungsbeispiel variieren eine Deckbandrücknahme sowie die Form der betroffenen Kante des Deckbandes periodisch in Umfangsrichtung der Schaufelreihe, zu der das Deckband gehört. Dabei steht die Periode P der umfangsgerichteten Variation der Deckbandrücknahme und der Deckbandkantenform in einer Ausgestaltung in einem ganzzahligen Verhältnis zur Schaufelteilung S der mit Deckband versehenen Schaufelreihe steht, gemäß $n \times P = S$, wobei n eine natürliche Zahl größergleich 1 ist. Die Periode P der umfangsgerichteten Variation der Deckbandrücknahme ist somit beispielsweise gleich der Schaufelteilung S.

Dabei kann vorgesehen sein, dass das Maximum der Deckbandrücknahme in Umfangsrichtung der Schaufelreihe betrachtet jeweils im halben Abstand zwischen zwei benachbarten Schaufeln der Schaufelreihe (also in Umfangsrichtung betrachtet mittig zwischen zwei benachbarten Schaufeln) ausgebildet ist.

Die Größe der Deckbandrücknahme kann beispielsweise wie folgt gewählt werden. Wenn die Deckbandrücknahme d definiert wird als Abstand zwischen der erwähnten, durch eine Polynom-Interpolation oder eine Spline-Interpolation gebildeten Verbindungslinie zu einer in konstantem Abstand dazu verlaufenden Kurve durch die Stelle der maximalen Deckbandrücknahme. Dann soll bezogen auf die Ringkanalweite W an der dem Ort der maximalen Rücknahme nächst gelegenen Schaufelkante (Vorderkante VK oder Hinterkante HK) die Deckbandrücknahme d mindestens 1% beträgt, d.h. $dVK / WVK > 0,01$ und/oder $dHK / WHK > 0,01$. Dabei gilt einschränkend, dass die Deckbandrücknahme im Vorderkantenbereich dVK direkt an der Schaufelvorderkante und die Deckbandrücknahme im Hinterkantenbereich dHK direkt an der Schaufelhinterkante zu ermitteln ist, wenn sich der Ort der maximalen Deckbandrücknahme innerhalb der Schaufelreihe zwischen Vorder- und Hinterkante befindet.

Die Größe der Deckbandrücknahme kann dabei bis 8 % betragen, d.h. $dVK / WVK < 0.08$ und/oder $dHK / WHK < 0.08$.

Die Erfindung betrifft auch eine Turbine, insbesondere eines Flugtriebwerks, mit einer Deckbandanordnung nach Anspruch 1.

Es wird darauf hingewiesen dass die erfindungsgemäße Deckbandanordnung eine Schaufelreihe von verdrehbaren oder unverdrehbar fixierten Stator- oder Rotorschaufeln aufweisen kann. Weiter wird darauf hingewiesen, dass die Strömungsmaschine wenigstens teilweise in ein Bauteil oder eine Bauteilgruppe eingebettet sein kann, bei dem es sich um eine rotierende Welle oder ein stehendes Gehäuse handelt.

Die vorliegende Erfindung bezieht sich auf Schaufelreihen von Turbinen axialer oder halbaxialer Bauart mit gasförmigem oder flüssigem Arbeitsmedium. Die Turbine kann eine oder mehrere Stufen mit jeweils einem Stator und einem Rotor umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie vom Arbeitsmedium übernehmen. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben.

Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Turbine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren.

Bei der Strömungsmaschine, in der eine erfindungsgemäße Deckbandanordnung eingesetzt wird, handelt es sich beispielsweise um ein Strahltriebwerk, insbesondere ein Turbofan-Triebwerk.

Im Folgenden wird die Erfindung anhand von Ausführungsbeispielen in Verbindung mit den Figuren beschrieben. Dabei zeigen:

Fig. 1a: einen Turbinenabschnitt nach dem Stand der Technik mit einem Rotor und einem Stator, die jeweils eine Deckbandanordnung aufweisen;

Fig. 1b: eine Deckbandanordnung nach dem Stand der Technik, wobei bestimmte Referenzpunkte an umliegenden Schaufelreihen definiert sind;

Fig. 1c: eine Deckbandanordnung nach dem Stand der Technik, wobei bestimmte Referenzpunkte ohne umliegenden Schaufelreihen definiert sind;

Fig. 2a: ein Ausführungsbeispiel einer Deckbandanordnung, bei der eine Deckbandrücknahme im Vorderkantenbereich erfolgt;

Fig. 2b: ein weiteres Ausführungsbeispiel einer Deckbandanordnung, bei der eine Deckbandrücknahme im Vorderkantenbereich erfolgt;

Fig. 2c: ein weiteres Ausführungsbeispiel einer Deckbandanordnung, bei der eine Deckbandrücknahme im Vorderkantenbereich erfolgt;

Fig. 3a: ein Ausführungsbeispiel einer Deckbandanordnung, bei der eine Deckbandrücknahme im Hinterkantenbereich erfolgt;

Fig. 3b: ein weiteres Ausführungsbeispiel einer Deckbandanordnung, bei der eine Deckbandrücknahme im Hinterkantenbereich erfolgt;

Fig. 4a: ein Ausführungsbeispiel einer Deckbandanordnung, bei der eine Deckbandrücknahme im Vorderkantenbereich und im Hinterkantenbereich erfolgt;

Fig. 4b: ein weiteres Ausführungsbeispiel einer Deckbandanordnung, bei der eine Deckbandrücknahme im Vorderkantenbereich und im Hinterkantenbereich erfolgt;

Fig. 5a: eine Schaufelreihe mit Deckbandanordnung unter Darstellung von Parametern, mit denen die Größe einer Deckbandrücknahme im Vorderkantenbereich angegeben werden kann;

Fig. 5b: eine Schaufelreihe mit Deckbandanordnung unter Darstellung von Parametern, mit denen die Größe einer Deckbandrücknahme im Hinterkantenbereich angegeben werden kann; und

Fig. 6: in perspektivischer Darstellung eine periodische Umfangsvariation einer Deckbandrücknahme im Vorderkantenbereich.

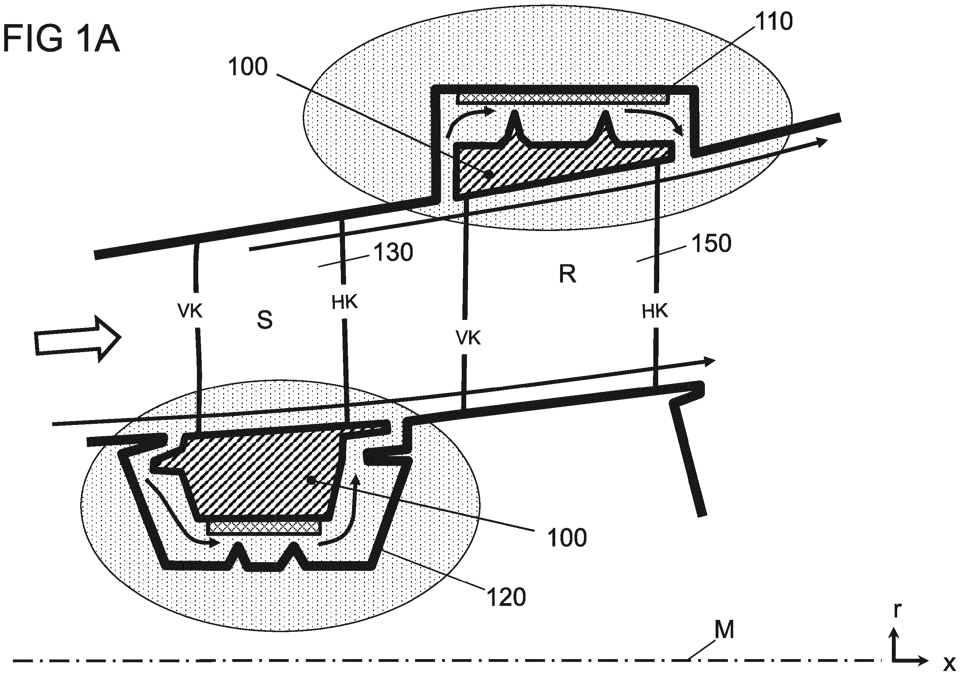

Zum besseren Verständnis der Erfindung wird zunächst der Stand der Technik anhand der Figuren 1a bis 1c erläutert werden.

Die Fig. 1a zeigt in Schnittansicht schematisch einen Abschnitt einer Turbine, bestehend aus einer Schaufelreihe 130 eines Stators S und einer Schaufelreihe 150 eines Rotors R. Es ist jeweils eine Deckbandanordnung 100 am äußeren Schaufelende des Rotors R sowie des Stators S vorgesehen. Nach dem Stand der Technik umfasst die Rotor-Deckbandanordnung eine große Kavität, die im nicht-rotierenden Gehäuse 110 vorgesehen ist und das Deckband 100 zur Schaffung einer möglichst glatten äußeren Hauptströmungspfadbegrenzung vollständig in sich aufnimmt. Entsprechend umfasst die Stator-Deckbandanordnung eine große Kavität, die in der rotierenden Nabe 120 vorgesehen ist und die das Deckband 100 zur Schaffung einer möglichst glatten inneren Hauptströmungspfadbegrenzung vollständig in sich aufnimmt.

M bezeichnet die Maschinenachse der Turbine, x die axiale Richtung und r die radiale Richtung.

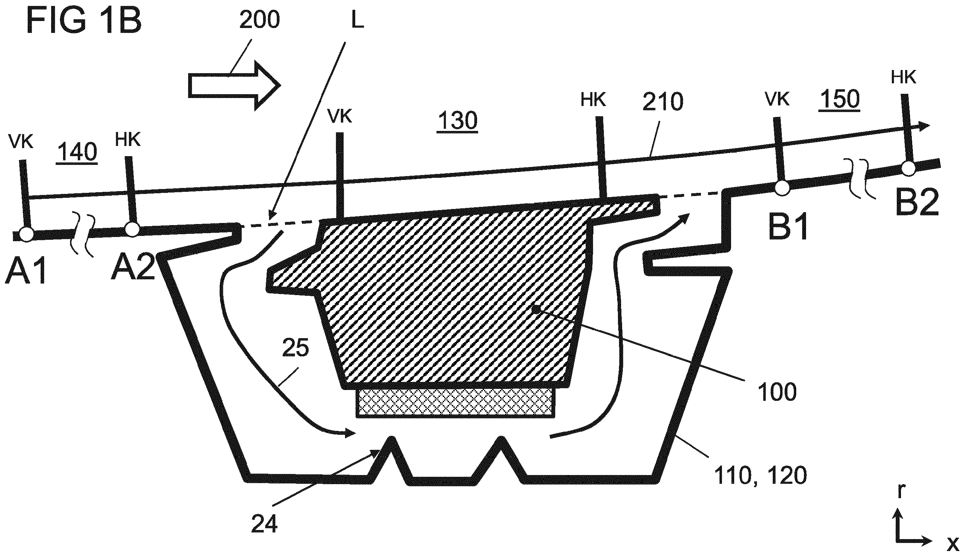

Die Fig. 1b zeigt, stellvertretend für Deckbänder von verstellbaren oder festen Rotoren und Statoren, eine Anordnung aus drei Schaufelreihen 130, 140, 150 an einem Rand des Hauptströmungspfades einer Turbine, bestehend aus einer stromauf liegenden Schaufelreihe 140, einer Schaufelreihe 130 mit Deckband und einer stromab liegenden Schaufelreihe 150. Es kann sich bei dieser Darstellung sowohl um eine Region am festen Gehäuse 110 als auch eine Region an der rotierenden Nabe 120 der Turbine handeln. Die Hauptströmung 200 im Hauptströmungspfad ist durch einen dicken Pfeil gekennzeichnet und erfolgt von links nach rechts. Ebenso verläuft die innerhalb der Deckbandkavität auftretende Leckageströmung 25 in Richtung der Hauptströmung, d.h. von der Verbindungstelle der Kavität mit dem Hauptströmungspfad stromauf der mit Deckband 100 versehenen Schaufelreihe 130 zur Verbindungstelle der Kavität mit dem Hauptströmungspfad stromab des betreffenden Deckbands 100, und folgend dem stromabwärts im Hauptströmungspfad gegebenen Druckgefälle.

Das Deckband 100 ist wie erwähnt in ein umgebendes Bauteil oder eine umgebende Baugruppe (Gehäuse 110 oder Rotornabe 120) eingebettet und fügt sich nach dem Stand der Technik glatt in den Verlauf des Hauptströmungspfades ein. Das Deckband 100 kann massiv oder auch (wie hier nicht gezeigt) hohl gestaltet sein und besteht aus einem oder mehreren Bauteilen. Die zwischen dem Deckband 100 und dem umgebenden Bauteil auftretende Leckageströmung 25 (kleine Pfeile), die etwa mit der Hauptströmungsrichtung 200 verläuft, wird durch Mittel zur Dichtung, in den meisten Fällen durch eine Anzahl von Dichtspitzen 24 gemindert. Die Dichtspitzen können am umgebenden Bauteil 110, 120 oder auch (wie hier nicht aber in Fig. 1a dargestellt) am Deckband selbst angeordnet sein. Zwischen dem umgebenden Bauteil 110, 120 und dem Deckband 100 besteht üblicherweise eine Relativbewegung.

Im Bereich des Deckbandes 100 sind die Vorderkante VK und Hinterkante HK der betrachteten Schaufelreihe 130 angedeutet. Stromauf des Deckbandes 100 sind die Vorderkante und die Hinterkante der stromauf liegenden Schaufelreihe 140 angedeutet; der Fusspunkt dieser Vorderkante ist mit A1 gekennzeichnet; der Fusspunkt dieser Hinterkante ist mit A2 gekennzeichnet. Stromab des Deckbandes 100 sind Vorderkante und Hinterkante der stromab liegenden Schaufelreihe 150 angedeutet; der Fusspunkt dieser Vorderkante ist mit B1 gekennzeichnet; der Fusspunkt dieser Hinterkante ist mit B2 gekennzeichnet. Ein dünner langer Pfeil 210 charakterisiert die randnahe Strömung entlang der im Wesentlichen glatt verlaufenden Berandung des Hauptströmungspfades. Nach dem Stand der Technik verläuft die Kontur des Deckbands 100 am Hauptströmungspfad nicht unterhalb einer Verbindungslinie L, die durch ein Polynom dritten Grades oder ein Spline dritten Grades gebildet wird, das durch die vier Referenzpunkte A1, A2, B1, B2 verläuft. Mit anderen Worten ist die Kontur des Deckbandes 100 nicht in die Kavität zurückgenommen.

Eine sehr geringfügige Abweichung der Verbindungslinie L, die aber gemessen gegen andere Abmessungen des Deckbandes untergeordnet klein ist, kann beim Stand der Technik aufgrund von Fertigungstoleranzen auftreten oder auch an Betriebspunkten der Turbine abseits des Auslegungszustandes durch thermische Verstimmung der Bauteile zustande kommen. Wie in Fig. 1b skizziert, tritt die Hauptströmung im Randbereich des Hauptströmungspfades ohne Beeinflussung durch einen Absatz oder eine Unebenheit im Konturverlauf der Hauptströmungspfadberandung in die Schaufelreihe mit Deckband ein und strömt über das in Flucht mit der restlichen Kontur angeordnete Deckband 100 hinweg.

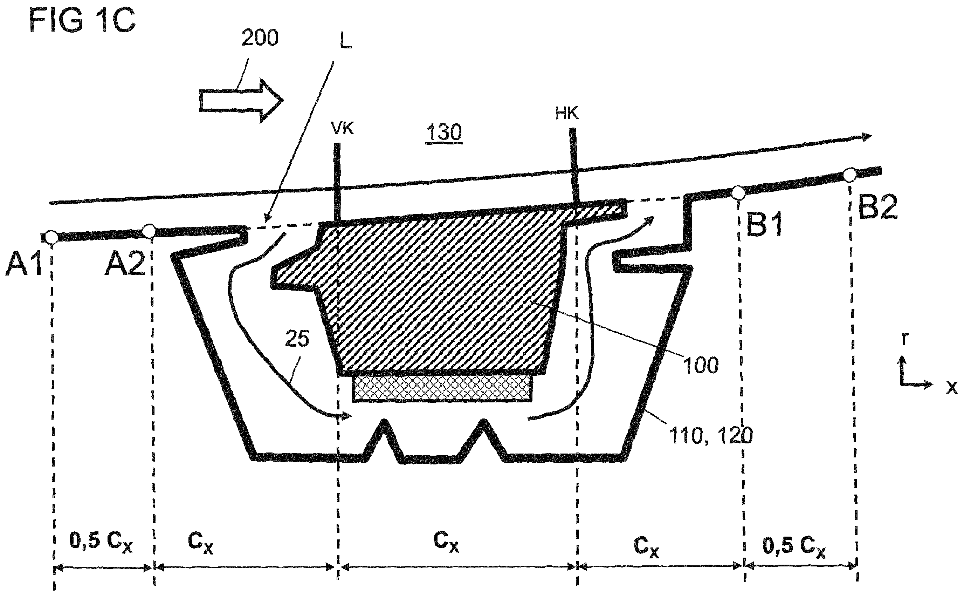

Für den Fall, dass es stromauf des Deckbandes 100 keine Schaufelreihe gibt, ist die Lage des Punktes A1 durch einen Abstand zur Vorderkante von 150% der axialen Länge Cx am Rand der mit Deckband 100 versehenen Schaufelreihe 130 bestimmt. Die Lage des Punktes A2 ist durch einen Abstand zur Vorderkante von 100% der axialen Länge Cx am Rand der mit Deckband 100 versehenen Schaufelreihe bestimmt. Dies ist in der Fig. 1c dargestellt.

Für den Fall, dass es stromab des Deckbandes 100 keine Schaufelreihe gibt, ist die Lage des Punktes B1 durch einen Abstand zur Hinterkante von 100% der axialen Länge Cx am Rand der mit Deckband 100 versehenen Schaufelreihe 130 bestimmt, siehe Fig. 1c. Die Lage des Punktes B2 ist durch einen Abstand zur Hinterkante von 150% der axialen Länge Cx am Rand der mit Deckband 100 versehenen Schaufelreihe 130 bestimmt.

Eine konventionelle Deckbandkonfiguration nach dem Stand der Technik, wie sie in der Fig. 1b gezeigt ist, sieht somit einen Eintritt der Hauptströmung in der Nähe der Hauptströmungspfadberandung in die Schaufelreihe mit Deckband ohne eine Beeinflussung durch einen Absatz oder eine Unebenheit im Konturverlauf vor. Dabei verläuft die Strömung glatt über die Öffnungen der Deckbandkavität und die dem Hauptströmungspfad zugewandte und in Flucht mit der stromauf und stromab befindlichen Kontur angeordnete Seite des Deckbandes. Die an den Kavitätsöffnungen anliegenden statischen Drücke, die den Leckagestrom bestimmen, sind bei einer solchen Anordnung fest vorgegeben und besitzen eine erhebliche Differenz. Die Leckageströmung 25 tritt, wie durch die dünnen geschwungenen Pfeile angedeutet, stromauf der Deckbandanströmkante in die Kavität ein und stromab der Deckbandabströmkante aus der Kavität aus.

Ziel der vorliegenden erfindungsgemäßen Lösung ist es, den statischen Druck an der Anströmkante und an der Abströmkante des Deckbandes durch besondere Gestalt des Deckbandes im Bereich der Schaufelvorder- und/oder der Schaufelhinterkante so zu beeinflussen, dass das statische Druckgefälle zwischen den Öffnungen der Kavität am Hauptströmungspfad und damit der unerwünschte Leckagestrom verringert oder idealerweise unterbunden wird.

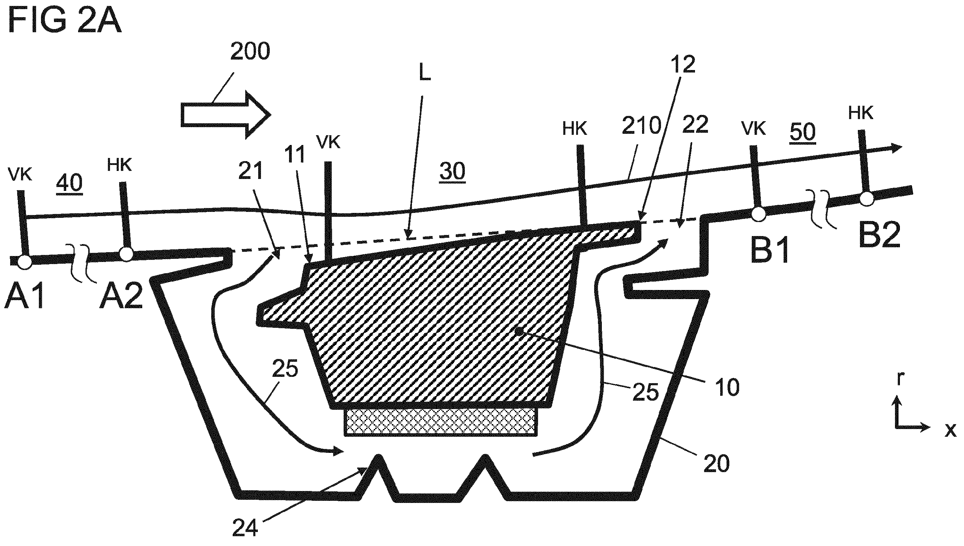

Erfindungsgemäße Deckbandkonfigurationen sind in Fig. 2a bis Fig. 4b dargestellt. Von Bedeutung für die vorliegende Erfindung ist allein die Konturformgebung des Deckbandes in der Nähe des Hauptströmungspfades im Bereich um die Vorder- und Hinterkante der Schaufelreihe. Nicht Gegenstand der Erfindung ist die Gestalt des Deckbandes im tieferen Inneren der Kavität, in die das Deckband eingebettet ist. Ebenfalls nicht Gegenstand der Erfindung ist die genaue Gestaltung der die Kavität umgebenden Bauteile und die Gestaltung der Dichtmittel. Die genannten nicht erfindungsrelevanten Merkmale sind hier zum Zwecke der Übersichtlichkeit nur soweit in vereinfachter Form skizziert, wie dies für die Darstellung und das Verstehen relevanter Zusammenhänge der Erfindung notwendig ist.

Die Fig. 2a bis Fig. 2c zeigen beispielhaft einige erfindungsgemäße Deckbandanordnungen mit einer Rücknahme im Bereich der Vorderkante der betreffenden Schaufelreihe. Eine erfindungsgemäße Rücknahme ist dadurch gekennzeichnet, dass in mindestens einem frei wählbaren Längsschnitt der Turbine ein Teil der Deckbandkontur unterhalb der Verbindungslinie L, d. h.

vom Hauptströmungspfad weg in die Kavität zurückgenommen ist und auf diese Weise für eine Krümmung der wandnahen Stromlinien und für eine lokale Änderung des Druckfeldes nahe der Kavitätsöffnungen an der Hauptströmungspfadberandung sorgt. Die Verbindungslinie L ist dabei eine Polynom-Interpolation dritten Grades oder eine Spline-Interpolation dritten Grades durch die in Bezug auf die Fig. 1b und Fig. 1c beschriebenen Referenzpunkte A1, A2, B1, B2, die auch in Fig. 2a bis Fig. 2c dargestellt sind. Die Wahl dieser Referenzpunkte ist dabei nur beispielhaft. Grundsätzlich können auch andere Referenzpunkte gewählt werden.

Die Fig. 2a zeigt, stellvertretend für Deckbänder von verstellbaren oder festen Rotoren und Statoren, eine Anordnung aus drei Schaufelreihen 30, 40, 50 an einem Rand des Hauptströmungspfades einer Turbine, bestehend aus einer stromauf liegenden Schaufelreihe 40, einer Schaufelreihe 30 mit erfindungsgemäßem Deckband 10 und einer stromab liegenden Schaufelreihe 50. Bei der Struktur 20, die die Kavität ausbildet, in der sich das Deckband 10 befindet, handelt es sich beispielsweise und eine rotierende Nabe oder ein festes Gehäuse. Die Hauptströmung 200 im Hauptströmungspfad ist durch einen dicken Pfeil gekennzeichnet und erfolgt von links nach rechts. Ein dünner langer Pfeil 210 charakterisiert die randnahe Strömung entlang der Berandung des Hauptströmungspfades. Des Weiteren ist innerhalb der Deckbandkavität eine Leckageströmung 25 ausgebildet. Die Kavität weist eine vordere Kavitätsöffnung 21 zum Hauptströmungspfad 200 stromauf der mit Deckband 10 versehenen Schaufelreihe 30 und eine hintere Kavitätsöffnung 22 zum Hauptströmungspfad 200 stromab der mit Deckband 10 versehenen Schaufelreihe 30 auf.

Das Deckband 10 umfasst bezogen auf ein im Hauptströmungspfad strömendes Fluid eine Anströmkante 11 und eine Abströmkante 12 auf. Die Anströmkante 11 befindet sich im Bereich der Vorderkante VK der Schaufelreihe 30 und die Abströmkante 12 befindet sich im Bereich der Hinterkante HK der Schaufelreihe 30.

Die Fig. 2a zeigt ein Ausführungsbeispiel, bei dem die Deckbandkontur im Bereich der Anströmkante 11 des Deckbandes 10 und der Vorderkante VK der Schaufelreihe 30 bezogen auf Verbindungslinie L am stärksten in die Kavität zurückgenommen ist und die Rücknahme in Richtung der Schaufelhinterkante HK abnimmt. Es kann vorteilhaft sein, wenn die Rücknahme an der Schaufelhinterkante oder an der Deckbandabströmkante zu null wird.

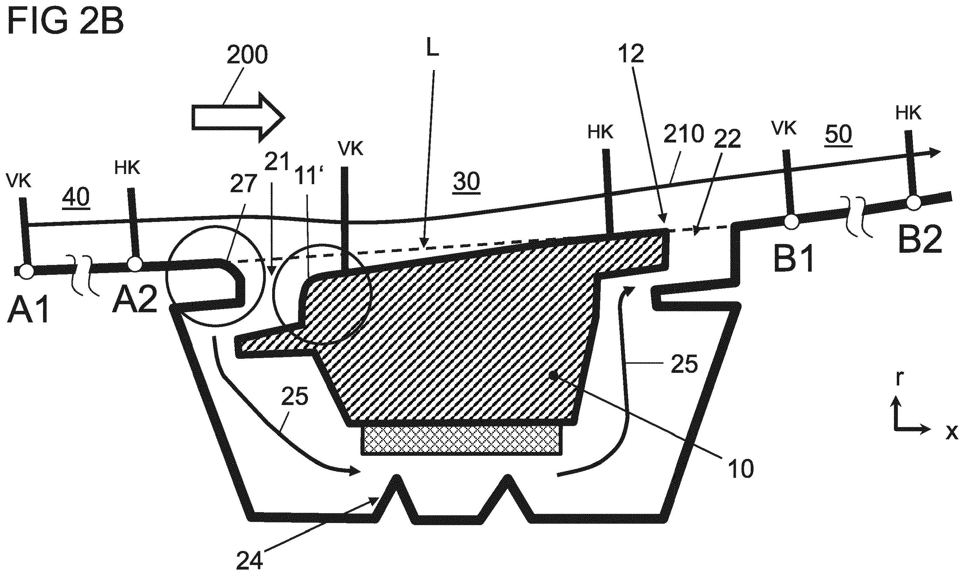

Dabei kann, wie in Fig. 2b skizziert, die Anströmkante 11' des Deckbandes 10 zur besseren Strömungsführung mit einer Abrundung versehen sein oder eine nasenförmige Gestalt besitzen. Im Bereich der stromauf der Schaufelreihe 30 vorgesehenen Öffnung 21 der Kavität am Hauptströmungspfad ergibt sich durch das rückgenommene Deckband ein Rücksprung, dem sich die Strömung anpasst. Dabei kann es vorteilhaft sein, wenn stromauf des Deckbandes 10 am Hauptströmungspfad die Kante 27 des die Kavitätsöffnung 21 stromaufwärtig begrenzenden Bauteils angefast oder abgerundet ausgebildet ist.

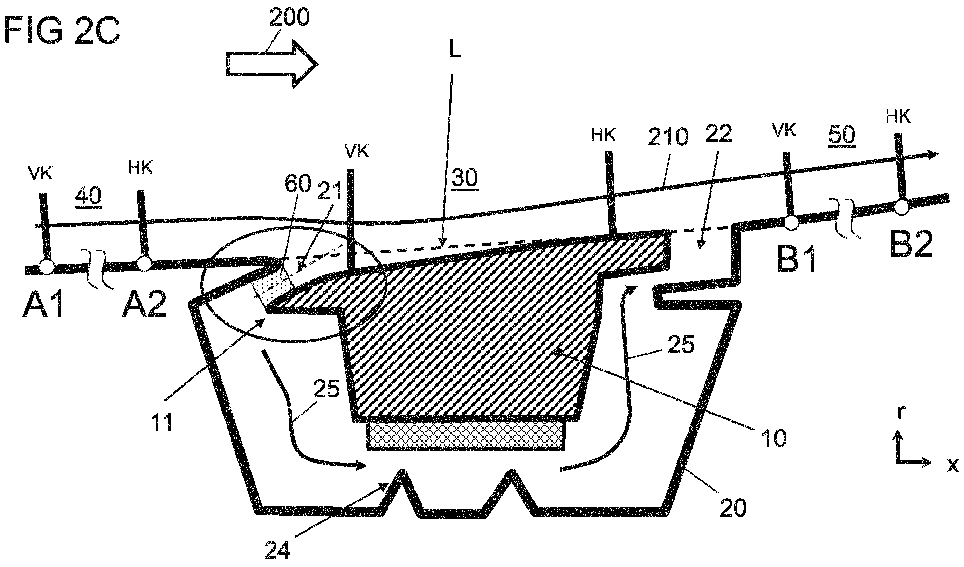

Die Fig. 2c zeigt eine erfindungsgemäße Lösung, bei der die hauptströmungspfadzugewandte Kontur des Deckbandes 10 im Bereich seiner Anströmkante 11 so ausgebildet ist, dass angrenzend an den Hauptströmungspfad stromauf der Schaufelvorderkante VK zwischen der Deckbandkontur und der Außenkontur der Kavität eine (gegebenenfalls auch gekrümmte) Passage 60 gebildet ist, siehe schattierte Fläche in Fig. 2c. Es ist vorteilhaft, wenn die Passage 60 die eintretende Leckageströmung mit einer Richtungskomponente entgegen der Hauptströmung leitet und hierzu die Längsachse der Passage 60 zwischen sich und der Verbindungslinie L einen spitzen Winkel ausbildet (in mathematisch negativer Drehrichtung, im Uhrzeigersinn).

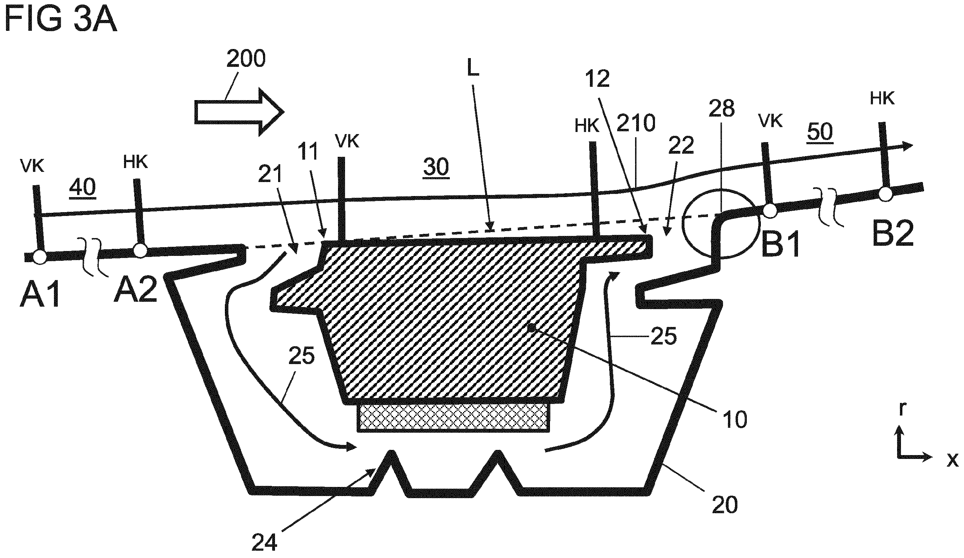

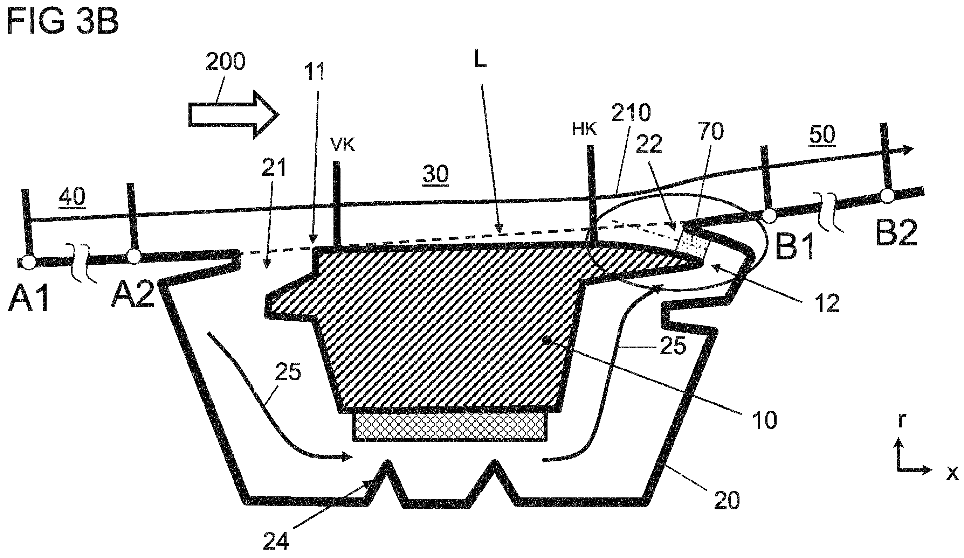

Die Fig. 3a und Fig. 3b zeigen beispielhaft erfindungsgemäße Deckbandkonfigurationen mit einer Rücknahme der Deckbandkontur im Bereich der Abströmkante des Deckbandes bzw. der Hinterkante der betreffenden Schaufelreihe. Zum grundlegenden Aufbau wird dabei auf die Erläuterungen zu Fig. 2a bis Fig. 2c verwiesen.

Die erfindungsgemäße Rücknahme bei den Fig. 3a und Fig. 3b sieht vor, dass in mindestens einem frei wählbaren Längsschnitt der Turbine ein Teil der Deckbandkontur unterhalb der Verbindungslinie L verbleibt und auf diese Weise für eine Krümmung der wandnahen Stromlinien und eine lokale Änderung des Druckfeldes sorgt. Im Bereich der stromab der Schaufelreihe 30 vorgesehenen Öffnung 22 der Kavität am Hauptströmungspfad ergibt sich durch das rückgenommene Deckband ein Vorsprung, wobei stromab des Deckbandes 10 am Hauptströmungspfad die Kante 28 des die Kavität stromabwärts begrenzenden Bauteils in die Strömung vorsteht und auf die Strömung eine Aufstauwirkung ausübt. Es ist günstig, wenn die Kante 28 des die Kavität stromabwärts begrenzenden Bauteils angefast oder abgerundet ausgebildet ist.

Die Fig. 3a zeigt eine Ausführungsvariante, bei der die Abströmkante 12 des Deckbandes im Wesentlichen kantig ausgeführt ist. Dabei ist es von Vorteil, wenn die stromabwärts der Deckbandabströmkante vorgesehene Kante 28 der Kavitätsöffnung 22 abgerundet gestaltet ist.

Es kann auch vorgesehen sein, wenn, wie in Fig. 3b dargestellt, die Abströmkante 12 des Deckbandes 10 angefast oder abgerundet ausgebildet ist. Es kann weiterhin vorteilhaft sein, wenn die Abströmkante 12 des Deckbandes 10 nasenförmig ausgebildet ist und vorsteht.

Die Fig. 3b zeigt dabei eine Ausführungsvariante, bei der die hauptströmungspfadzugewandte Kontur des Deckbandes 10 im Bereich seiner Abströmkante 12 so ausgebildet ist, dass angrenzend an den Hauptströmungspfad stromab der Schaufelhinterkante HK zwischen der Deckbandkontur und der Außenkontur der Kavität eine (gegebenenfalls auch gekrümmte) Passage 70 gebildet ist, siehe schattierte Fläche in Fig. 3b. Es ist vorteilhaft, wenn die Passage 70 die austretende Leckageströmung mit einer Richtungskomponente entgegen der Hauptströmung leitet und die Längsachse der Passage 70 zwischen sich und der Verbindungslinie L einen spitzen Winkel ausbildet (in mathematisch positiver Drehrichtung, gegen den Uhrzeigersinn).

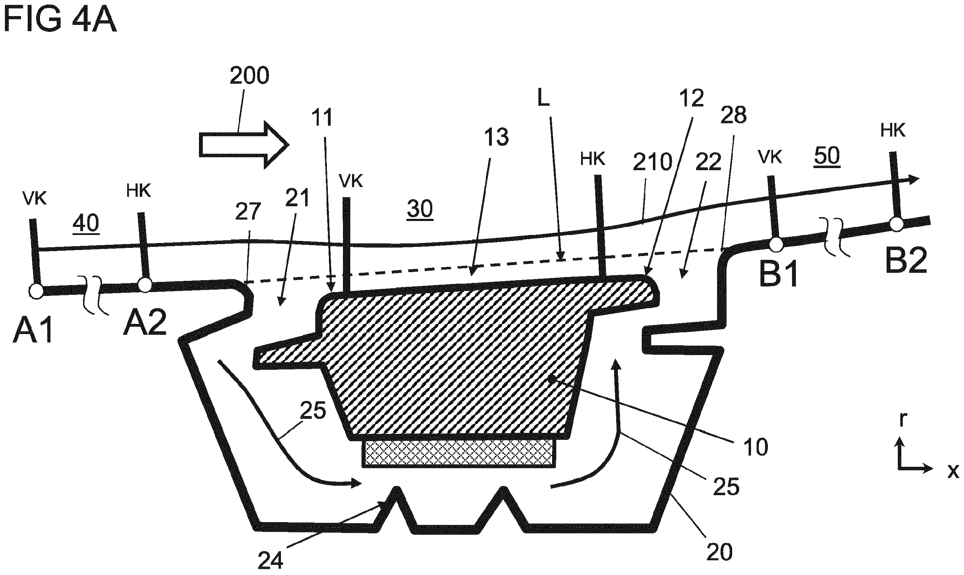

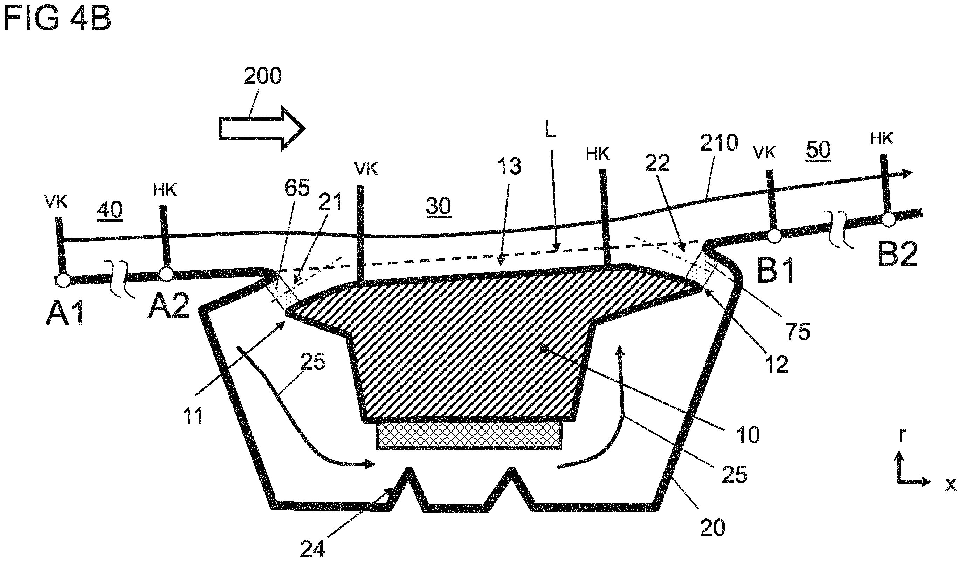

Die Fig. 4a, Fig. 4b zeigen beispielhaft erfindungsgemäße Deckbandkonfigurationen mit einer Rücknahme der Deckbandkontur sowohl im Bereich der Anströmkante 11 des Deckbandes 10 bzw. der Vorderkante VK der betreffenden Schaufelreihe 30 als auch im Bereich der Abströmkante 12 des Deckbandes 10 bzw. der Hinterkante HK der betreffenden Schaufelreihe 30. Eine erfindungsgemäße Rücknahme ist dadurch gekennzeichnet, dass in mindestens einem frei wählbaren Längsschnitt der Turbine die Deckbandkontur unterhalb der Verbindungslinie L (die wie bisher als Polynom oder Spline durch die Referenzpunkte A1, A2, B1, B2 definiert ist) verbleibt und auf diese Weise für eine Krümmung der wandnahen Stromlinien und eine lokale Änderung des Druckfeldes an beiden Öffnungen 21, 22 der Kavität am Hauptströmungspfad (stromauf und stromab der Schaufelreihe 30 mit Deckband 10) sorgt.

Im Bereich der stromauf der Schaufelreihe 30 vorgesehenen Öffnung 21 der Kavität am Hauptströmungspfad ergibt sich durch das rückgenommene Deckband 10 ein Rücksprung, dem sich die Hauptströmung anpasst. Dabei kann es vorteilhaft sein, wenn am Hauptströmungspfad die Kante 27 des die Kavitätsöffnung stromaufwärts begrenzenden Bauteils angefast oder abgerundet ausgebildet ist, siehe Fig. 4a. Es ist weiterhin günstig, wenn die Anströmkante 11 des Deckbandes 10 angefast, abgerundet oder nasenförmig ausgebildet ist.

Im Bereich der stromab der Schaufelreihe 30 vorgesehenen Öffnung 22 der Kavität am Hauptströmungspfad ergibt sich durch das rückgenommene Deckband 10 ein Vorsprung, wobei am Hauptströmungspfad die Kante 28 des die Kavität stromabwärts begrenzenden Bauteils in die Strömung vorsteht und auf die Strömung eine Aufstauwirkung ausübt. Es ist günstig, wenn die Kante 28 des die Kavitätsöffnung stromabwärts begrenzenden Bauteils angefast oder abgerundet ausgebildet ist, siehe Fig. 4a. Es ist weiterhin günstig, wenn die Abströmkante 22 des Deckbandes angefast, abgerundet oder nasenförmig ausgebildet ist, siehe Fig. 4a oder Fig. 4b.

Durch die Rücknahme der Deckbandkontur sowohl im Bereich der Anströmkante 11 des Deckbandes 10 als auch im Bereich der Abströmkante 12 des Deckbandes 10 ergibt sich ein durchgehender Bereich 13 zwischen Anströmkante 11 und Abströmkante 12 des Deckbandes 10, in dem eine Rücknahme gegenüber der Verbindungslinie L vorliegt. Wie in der Fig. 4a dargestellt, kann die Rücknahme in axialer Richtung dabei im Wesentlichen konstant sein. Alternativ kann der Wert der Rücknahme in axialer Richtung auch variieren.

Die Fig. 4b zeigt ein Ausführungsbeispiel, bei der die hauptströmungspfadzugewandte Kontur des Deckbandes 10 im Bereich seiner Abströmkante 11 so ausgebildet ist, dass angrenzend an den Hauptströmungspfad stromab der Schaufelhinterkante HK zwischen der Deckbandkontur und der Außenkontur der Kavität eine Passage 75 gebildet ist, wobei es vorteilhaft sein kann, wenn die Passage 75 die austretende Leckageströmung mit einer Richtungskomponente entgegen der Hauptströmung leitet und die Längsachse der Passage 75 zwischen sich und der Verbindungslinie L einen spitzen Winkel ausbildet (in mathematisch positiver Drehrichtung, gegen den Uhrzeigersinn).

Es kann weiterhin vorteilhaft sein, wenn die hauptströmungspfadzugewandte Kontur des Deckbandes 10 im Bereich seiner Anströmkante 11 so ausgebildet ist, dass angrenzend an den Hauptströmungspfad stromauf der Schaufelvorderkante VK zwischen der Deckbandkontur und der Außenkontur der Kavität eine Passage 65 gebildet ist, wobei es vorteilhaft sein kann, wenn die Passage 65 die eintretende Leckageströmung mit einer Richtungskomponente entgegen der Hauptströmung leitet und die Längsachse der Passage 65 zwischen sich und der Verbindungslinie L einen spitzen Winkel ausbildet (in mathematisch positiver Drehrichtung, gegen den Uhrzeigersinn).

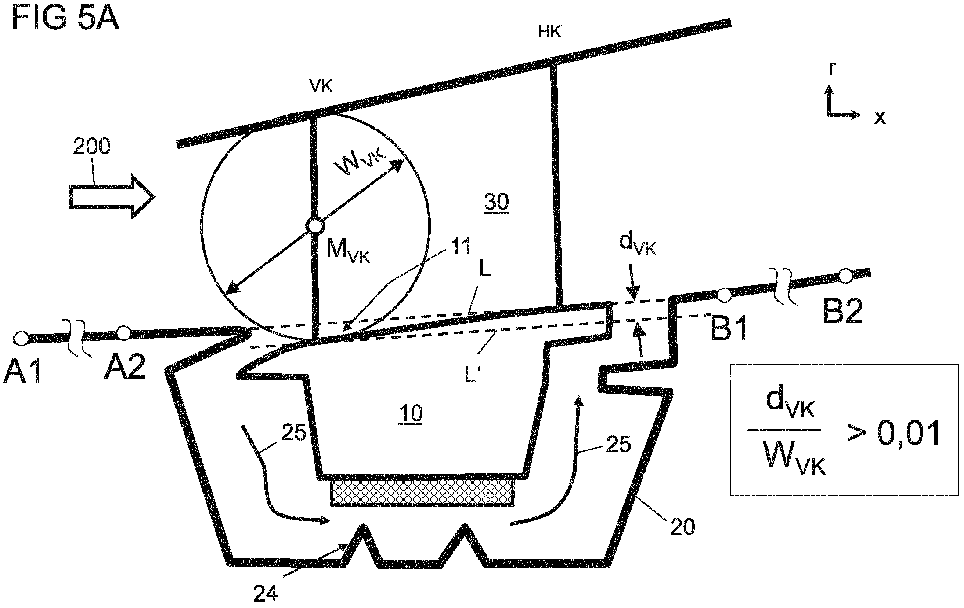

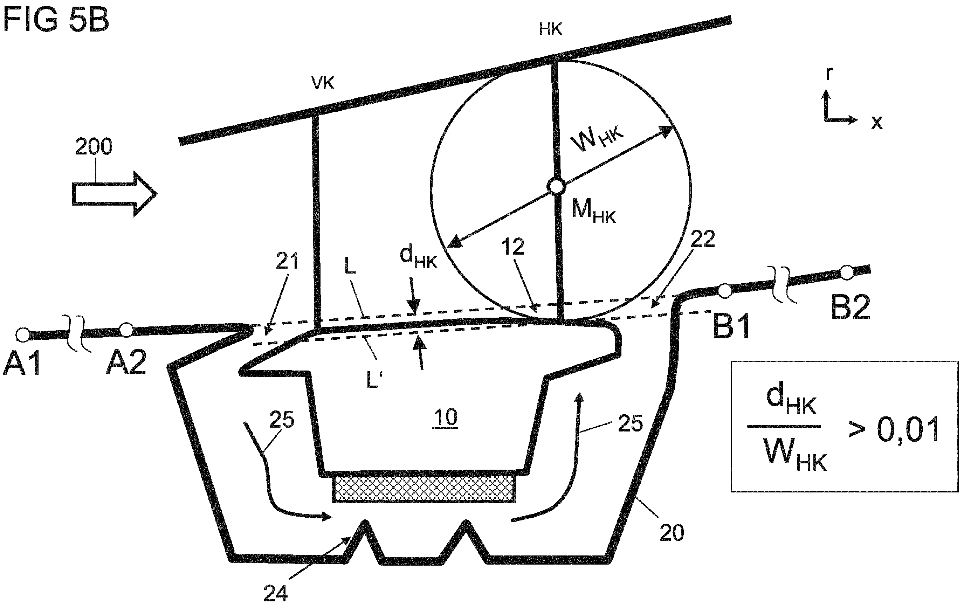

In den Fig. 5a und Fig. 5b werden Größen zur Quantifizierung der Deckbandrücknahme definiert. Die Fig. 5a zeigt eine Konfiguration mit Deckbandrücknahme im Vorderkantenbereich. Eine in konstantem Abstand zur Verbindungslinie L verlaufende Linie L' durch die Stelle maximaler Deckbandrücknahme definiert die Größe der Deckbandrücknahme. Die Größe der maximalen Rücknahme $d_{VK}$ wird erfindungsgemäß relativ zur Ringkanalweite $W_{VK}$ an der Vorderkante VK festgelegt. Die Ringkanalweite WVK ergibt sich als Durchmesser eines in den Ringkanal (Hauptströmungspfad) einbeschriebenen Kreises mit dem Mittelpunkt $M_{VK}$ auf der Vorderkante VK. Erfindungsgemäß gilt:

$$dVK / WVK > 0,01$$

Besonders vorteilhaft können Deckbandrücknahmen gemäß dVK /WVK > 0,02 sein.

Die Fig. 5b zeigt eine Konfiguration mit Deckbandrücknahme im Hinterkantenbereich. Eine in konstantem Abstand zur Verbindungslinie L verlaufende Linie L' durch die Stelle maximaler Deckbandrücknahme definiert die Größe der Deckbandrücknahme. Die Größe der maximalen Rücknahme $d_{HK}$ wird erfindungsgemäß relativ zur Ringkanalweite $W_{HK}$ an der Hinterkante HK festgelegt. Die Ringkanalweite $W_{HK}$ ergibt sich als Durchmesser eines in den Ringkanal (Hauptströmungspfad) einbeschriebenen Kreises mit dem Mittelpunkt $M_{HK}$ auf der Hinterkante HK. Erfindungsgemäß gilt:

$$dHK / WHK > 0,01$$

Besonders vorteilhaft können Deckbandrücknahmen gemäß dHK / WHK > 0,02 sein.

Befindet sich die maximal gefundene Rücknahme innerhalb der Schaufelreihe zwischen Vorder- und Hinterkante, wird die Deckbandrücknahme im Vorderkantenbereich $d_{VK}$ direkt an der Vorderkante VK und die Deckbandrücknahme im Hinterkantenbereich $d_{HK}$ direkt an der Hinterkante HK ermittelt.

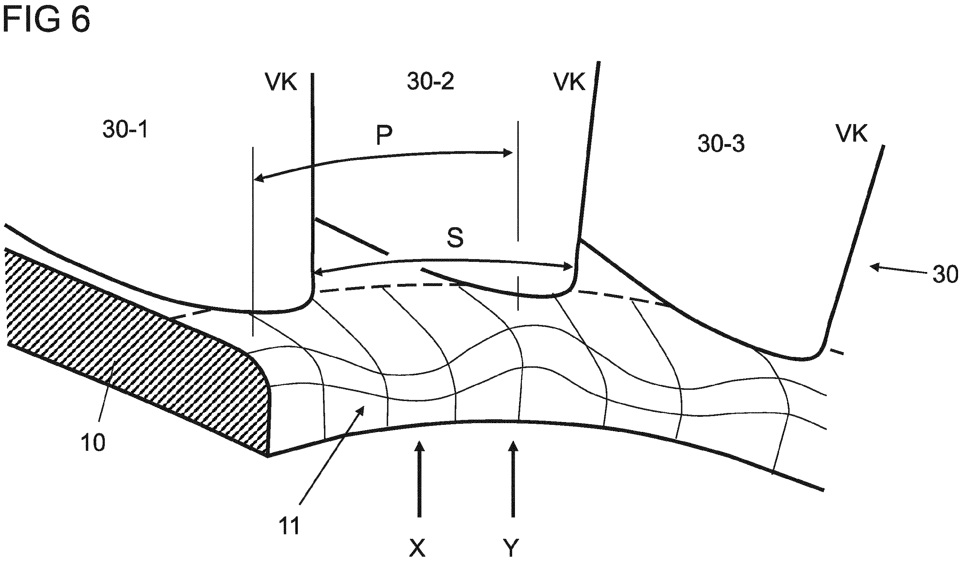

Die Fig. 6 zeigt in räumlicher Ansicht den Vorderkantenbereich einer Schaufelreihe 30 mit Deckband 10 über einem Teil des Umfangs. Von der Schaufelreihe 30 sind drei Schaufeln 30-1, 30-2, 30-3 dargestellt. Die Deckbandrücknahme ist hier derart gestaltet, dass die Deckbandrücknahme und die Form der Anströmkante des Deckbandes erfindungsgemäß periodisch in Umfangsrichtung der Schaufelreihe, zu der das Deckband gehört, variieren. Dabei wechseln sich Bereiche X maximaler Rücknahme und Bereiche Y minimaler Rücknahme in Umfangsrichtung periodisch ab. In einer Ausgestaltung ist vorgesehen, dass die Bereiche X maximaler Rücknahme sich - bezogen auf die Umfangsrichtung - gerade zwischen zwei Schaufeln 30-1, 30-2, 30-3 befindet.

Dabei kann vorgesehen sein, dass eine ganze Periode oder auch ein Vielfaches der Periode der besagten Rücknahmevariation im Wesentlichen mit einer Schaufelteilung S der betreffenden Schaufelreihe übereinstimmt: n x P = S. Die Darstellung in Fig. 6 zeigt das erfindungsgemäße Konzept am Beispiel der Anströmkante 11 bzw. der Vorderkantenregion einer Schaufelreihe 30 mit Deckband 10, doch gilt das hier Beschriebene erfindungsgemäß ebenfalls für eine Deckbandrücknahme im Hinterkantenbereich.

Die Erfindung beschränkt sich in ihrer Ausgestaltung nicht auf die vorstehend dargestellten Ausführungsbeispiele, die lediglich beispielhaft zu verstehen sind. Beispielsweise können die Prinzipien der Erfindung auch bei Deckbandanordnungen zum Tragen kommen, die nicht in einer Turbine ausgebildet sind.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

**Patentansprüche**

1. Deckbandanordnung einer Schaufelreihe (30) von Stator- oder Rotorschaufeln, die aufweist:

    - eine in einem Hauptströmungspfad einer Strömungsmaschine angeordnete Schaufelreihe (30) mit einer Mehrzahl von Schaufel, die jeweils eine Vorderkante (VK) und eine Hinterkante (HK) aufweisen,

- ein Deckband (10) der Schaufelreihe (30), das betrachtet in einem Längsschnitt der Strömungsmaschine wenigstens teilweise in ein Bauteil oder eine Bauteilgruppe (20) eingebettet ist, wobei eine Kavität ausgebildet ist, die das Deckband (10) umgibt und mit zwei Kavitätsöffnungen (21, 22) mit dem Hauptströmungspfad in Verbindung steht, wobei die vordere Kavitätsöffnung (21) stromauf der Vorderkante (VK) und die hintere Kavitätsöffnung (22) stromab der Hinterkante (HK) der Schaufeln der Schaufelreihe (30) vorgesehen ist,

- wobei das Deckband (10) eine Anströmkante (11) und eine Abströmkante (12) aufweist,

**dadurch gekennzeichnet,**
**dass** in mindestens einem Längsschnitt der Strömungsmaschine die Deckbandkontur im Bereich der Anströmkante (11) und/oder im Bereich der Abströmkante (12) derart vom Hauptströmungspfad weg in die Kavität zurückgenommen ist, dass ein insgesamt glatter Verlauf der Hauptströmungspfadberandung nicht mehr gegeben ist und stattdessen - in Strömungsrichtung betrachtet - die zurückgenommene Anströmkante (11) zu einem unmittelbar stromauf des Deckbandes (10) vorgesehenen Abschnitt der Hauptströmungspfadberandung einen Rücksprung und/oder ein unmittelbar stromab des Deckbandes (10) vorgesehener Abschnitt der Hauptströmungspfadberandung zu der zurückgenommenen Abströmkante (12) einen Vorsprung bildet.

2. Deckbandanordnung nach Anspruch 1, **dadurch gekennzeichnet, dass**

     - das Deckband (10), in Achsrichtung der Strömungsmaschine betrachtet, zwischen mindestens jeweils zwei am Rand des Hauptströmungspfades der Strömungsmaschine befindlichen Referenzpunkten (A1, A2, B1, B2) angeordnet ist;

     - die ersten Referenzpunkte (A1, A2) durch die Fusspunkte von Vorderkante und Hinterkante der stromauf des Deckbandes (10) angeordneten Schaufelreihe (40) oder - bei Fehlen dieser Schaufelreihe - durch zwei Randpunkte des Hauptströmungspfades gebildet werden, die sich 100% und 150% der axialen Erstreckung der mit Deckband (10) versehenen Schaufelreihe (30) stromauf der Vorderkante der mit Deckband (10) versehenen Schaufelreihe (3) befinden,

     - die zweiten Referenzpunkte (B1, B2) durch die Fusspunkte von Vorderkante und Hinterkante der stromab des Deckbandes (10) angeordneten Schaufelreihe (50) oder - bei Fehlen dieser Schaufelreihe - durch zwei Randpunkte des Hauptströmungspfades gebildet werden, die sich 100% und 150% der axialen Erstreckung der mit Deckband (10) versehenen Schaufelreihe (30) stromab der Hinterkante der mit Deckband (10) versehenen Schaufelreihe (30) befinden, und

- das Deckband (10) an wenigstens einem Ort des Umfangs und in wenigstens einem der Bereiche der Vorder- oder Hinterkante der zugehörigen Schaufelreihe (30) unter eine Verbindungslinie (L) in die Kavität zurückgenommen ist, die durch eine Polynom-Interpolation dritten Grades oder eine Spline-Interpolation dritten Grades durch die vier Referenzpunkte (A1, A2, B1, B2) gebildet ist.

3. Deckbandanordnung nach Anspruch 1 oder 2, **dadurch gekennzeichnet, dass** die Anströmkante (11) des Deckbandes (10) zur besseren Strömungsführung mit einer Fase oder einer Abrundung versehen ist.

4. Deckbandanordnung nach Anspruch 1 oder 2, **dadurch gekennzeichnet, dass** die Anströmkante (11) des Deckbandes (10) zur besseren Strömungsführung im Wesentlichen nasenförmig ausgebildet ist.

5. Deckbandanordnung nach einem der vorangehenden Ansprüche, **dadurch gekennzeichnet, dass** die Abströmkante (12) des Deckbandes (10) zur besseren Strömungsführung mit einer Fase oder Abrundung versehen ist.

6. Deckbandanordnung nach einem der Ansprüche 1 bis 4, **dadurch gekennzeichnet, dass** die Abströmkante (12) des Deckbandes (10) zur besseren Strömungsführung im Wesentlichen nasenförmig ausgebildet ist.

7. Deckbandanordnung nach einem der vorangehenden Ansprüche, **dadurch gekennzeichnet, dass** an der Kavitätsöffnung (21) stromauf der Schaufelreihe (30) mit Deckband (10) die Kante (27) des die Kavitätsöffnung (21) stromaufwärtig begrenzenden Bauteils an der Hauptströmungspfadberandung angefast oder abgerundet oder im Wesentlichen nasenförmig ausgebildet ist.

8. Deckbandanordnung nach einem der vorangehenden Ansprüche, **dadurch gekennzeichnet, dass** an der Kavitätsöffnung (22) stromab der Schaufelreihe (30) mit Deckband (10) die Kante (28) des die Kavitätsöffnung (22) stromabwärtig begrenzenden Bauteils an der Hauptströmungspfadberandung angefast oder abgerundet oder im Wesentlichen nasenförmig ausgebildet ist.

9. Deckbandanordnung nach einem der vorangehenden Ansprüche, soweit rückbezogen auf Anspruch 2, **dadurch gekennzeichnet, dass** die hauptströmungspfadzugewandte Kontur des Deckbandes (10) im Bereich seiner Anströmkante (11) so ausgebildet ist, dass angrenzend an den Hauptströmungspfad stromauf der Schaufelvorderkante zwischen der Deckbandkontur und der Außenkontur der Kavität eine Passage (60, 65) gebildet ist, wobei die Passage (60, 65) die eintretende Leckageströmung mit einer Richtungskomponente entgegen der Hauptströmung leitet und entsprechend die Längsachse der Passage (60, 65) zwischen sich und der Verbindungslinie (L) einen spitzen Winkel ausbildet.

10. Deckbandanordnung nach einem der vorangehenden Ansprüche, soweit rückbezogen auf Anspruch 2, **dadurch gekennzeichnet, dass** die hauptströmungspfadzugewandte Kontur des Deckbandes (10) im Bereich seiner Abströmkante (12) so ausgebildet ist, dass angrenzend an den Hauptströmungspfad stromab der Schaufelhinterkante zwischen der Deckbandkontur und der Außenkontur der Kavität eine Passage (70, 75) gebildet ist, wobei die Passage (70, 75) die austretende Leckageströmung mit einer Richtungskomponente entgegen der Hauptströmung leitet und entsprechend die Längsachse der Passage (70, 75) zwischen sich und der Verbindungslinie (L) einen spitzen Winkel ausbildet.

11. Deckbandanordnung nach einem der vorangehenden Ansprüche, **dadurch gekennzeichnet, dass** sowohl eine Deckbandrücknahme im Bereich der Anströmkante (11) als auch eine Deckbandrücknahme im Bereich der Abströmkante (12) vorgesehen sind.

12. Deckbandanordnung nach einem der vorangehenden Ansprüche, **dadurch gekennzeichnet, dass** eine Deckbandrücknahme sowie die Form der betroffenen Kante (11, 12) des Deckbandes (10) periodisch in Umfangsrichtung der Schaufelreihe (30), zu der das Deckband (10) gehört, variiert, wobei die Periode P der umfangsgerichteten Variation der Deckbandrücknahme und der Deckbandkantenform in einem ganzzahligen Verhältnis zur Schaufelteilung S der mit Deckband versehenen Schaufelreihe steht, gemäß n x P = S, wobei n eine natürliche Zahl größergleich 1 ist.

13. Deckbandanordnung nach Anspruch 12, **dadurch gekennzeichnet, dass** das Maximum (X) der Deckbandrücknahme in Umfangsrichtung der Schaufelreihe betrachtet jeweils im halben Abstand zwischen zwei benachbarten Schaufeln der Schaufelreihe (30) ausgebildet ist.

14. Deckbandanordnung nach einem der vorangehenden Ansprüche, soweit rückbezogen auf Anspruch 2, **dadurch gekennzeichnet, dass** die Deckbandrücknahme ($d_{VK}$, $d_{HK}$), definiert als Abstand zwischen der Verbindungslinie (L) und einer in konstantem Abstand dazu verlaufenden Kurve (L') durch die Stelle der maximalen Deckbandrücknahme und bezogen auf die Ringkanalweite (W) an der dem Ort der maximalen Rücknahme nächst gelegenen Schaufelkante (VK, HK) mindestens 1% beträgt, wobei einschränkend gilt, dass die Deckbandrücknahme ($d_{VK}$) im Vorderkantenbereich (VK) direkt an der Schaufelvorderkante und die Deckbandrücknahme ($d_{HK}$) im Hinterkantenbereich (HK) direkt an der Schaufelhinterkante zu ermitteln ist, wenn sich der Ort der maximalen Deckbandrücknahme innerhalb der Schaufelreihe zwischen Vorder- und Hinterkante befindet.

15. Turbine, insbesondere eines Flugtriebwerks, mit einer Deckbandanordnung nach Anspruch 1.

FIG 1A

EP 3 078 804 A1

FIG 1B

EP 3 078 804 A1

FIG 1C

200 L
130
A1 A2 HK VK B1 B2
100
110, 120
25
$0{,}5\,C_x$ $C_x$ $C_x$ $C_x$ $0{,}5\,C_x$
r x

FIG 2A

EP 3 078 804 A1

FIG 2B

FIG 2C

200

VK  HK  VK  L  HK  210  22  VK  50  HK

40  60 21  30  B1  B2

A1  A2

11  25

25  10

24  20

EP 3 078 804 A1

r  x

FIG 3A

# FIG 3B

EP 3 078 804 A1

FIG 4A

FIG 4B

FIG 5A

FIG 5B

$$\frac{d_{HK}}{W_{HK}} > 0,01$$

EP 3 078 804 A1

# FIG 6

EP 3 078 804 A1

Europäisches
Patentamt

European
Patent Office

Office européen
des brevets

**EUROPÄISCHER RECHERCHENBERICHT**

Nummer der Anmeldung

EP 16 16 2874

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/293402 A1 (KREISELMAIER ERICH [CH] ET AL) 1. Dezember 2011 (2011-12-01) * Abbildungen 1-3 * * Seite 2, Absatz [0023] - Seite 4, Absatz [0033] * ----- | 1-5,14, 15 | INV. F01D5/14 F01D5/22 F01D11/00 F01D11/08 |
| X | US 2012/121394 A1 (IIDA KOICHIRO [JP]) 17. Mai 2012 (2012-05-17) * Abbildungen 1-9 * * Seite 3, Absatz [0039] - Absatz [0042] * * Seite 3, Absatz [0056] - Seite 4, Absatz [0082] * * Seite 5, Absatz [0103] - Seite 6, Absatz [0112] * ----- | 1,2, 11-13,15 | |
| X | US 5 791 873 A (KREITMEIER FRANZ [CH]) 11. August 1998 (1998-08-11) * Abbildungen 1, 3 * * Spalte 2, Zeile 62 - Spalte 5, Zeile 17 * * Spalte 5, Zeile 63 - Spalte 6, Zeile 6 * * Spalte 6, Zeile 56 - Spalte 7, Zeile 6 * ----- | 1,4, 6-10,14, 15 | |
| X | US 2014/020392 A1 (HASE TAKAAKI [JP] ET AL) 23. Januar 2014 (2014-01-23) * Abbildungen 1-7 * * Seite 2, Absatz [0021] - Absatz [0041] * ----- | 1,3,4,6, 9,14,15 | |

RECHERCHIERTE SACHGEBIETE (IPC)

F01D

Der vorliegende Recherchenbericht wurde für alle Patentansprüche erstellt

| Recherchenort | Abschlußdatum der Recherche | Prüfer |
|---|---|---|
| München | 2. August 2016 | Lutoschkin, Eugen |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 16 2874

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2016

| Im Recherchenbericht angeführtes Patentdokument | Datum der Veröffentlichung | Mitglied(er) der Patentfamilie | Datum der Veröffentlichung |
|---|---|---|---|
| US 2011293402 A1 | 01-12-2011 | EP 2390466 A1<br>US 2011293402 A1 | 30-11-2011<br>01-12-2011 |
| US 2012121394 A1 | 17-05-2012 | CN 102472109 A<br>EP 2511476 A1<br>KR 20130084968 A<br>KR 20130085057 A<br>US 2012121394 A1<br>WO 2011070636 A1 | 23-05-2012<br>17-10-2012<br>26-07-2013<br>26-07-2013<br>17-05-2012<br>16-06-2011 |
| US 5791873 A | 11-08-1998 | DE 59609405 D1<br>EP 0799973 A1<br>JP H108910 A<br>JP 4180131 B2<br>US 5791873 A | 08-08-2002<br>08-10-1997<br>13-01-1998<br>12-11-2008<br>11-08-1998 |
| US 2014020392 A1 | 23-01-2014 | CA 2817298 A1<br>EP 2687682 A2<br>JP 5490191 B2<br>JP 2014020307 A<br>US 2014020392 A1 | 19-01-2014<br>22-01-2014<br>14-05-2014<br>03-02-2014<br>23-01-2014 |

EPO FORM P0461

Für nähere Einzelheiten zu diesem Anhang : siehe Amtsblatt des Europäischen Patentamts, Nr.12/82